# EUROPÄISCHE PATENTSCHRIFT

(11) **EP 2 027 401 B1**
(45) Veröffentlichungstag und Bekanntmachung des Hinweises auf die Patenterteilung: **05.10.2011**
(21) Anmeldenummer: 07729897.4
(22) Anmeldetag: 05.06.2007
(51) Int. Cl.: F16H 25/20

(54) **LINEAREINHEIT**
LINEAR UNIT
UNITÉ LINÉAIRE

(30) Priorität: 14.06.2006 DE 102006027523
(43) Veröffentlichungstag der Anmeldung: 25.02.2009
(73) Patentinhaber: RK Rose + Krieger GmbH Verbindungs- und Positioniersysteme, 32423 Minden (DE)
(72) Erfinder: SCHUNKE, Kurt, 32427 Minden (DE)
(74) Vertreter: Dantz, Jan Henning
(86) Internationale Anmeldenummer: PCT/EP2007/055517
(87) Internationale Veröffentlichungsnummer: WO 2007/144295

(56) Entgegenhaltungen:
- WO-A-2004/028305
- DE-U1- 20 016 209

## Beschreibung

Die Erfindung betrifft eine Lineareinheit entsprechend dem Oberbegriff des Anspruchs 1.

Solche Lineareinheiten dienen beispielsweise dazu, Maschinenkomponenten, die auf dem Führungsschlitten gelagert sind, hin- und herzuverfahren. Dazu wird die Gewindespindel motorisch oder manuell gedreht, so dass die darauf gelagerte Spindelmutter, die verdrehsicher in dem Führungsrohr gehalten ist, eine axiale Bewegung vollführt, je nach Drehrichtung der Gewindespindel reversierend. Selbstverständlich besteht auch die Möglichkeit, den Führungsschlitten verdrehsicher in der Längsnut des Führungsrohres zu halten. In jedem Fall sind der Führungsschlitten und die Spindelmutter fest miteinander verbunden.

Als Führungsrohre kommen bislang Strangpressprofile zum Einsatz, üblicherweise aus einem Leichtmetall, in die der Führungsschlitz durch eine mechanische Bearbeitung, vorzugsweise durch Fräsen eingebracht wird. Allerdings ist diese Art der Bearbeitung mit einem erheblichen Arbeitsaufwand verbunden, der sowohl das Fräsen wie auch ein anschließendes Nachbearbeiten, wie Entgraten oder dergleichen umfasst.

Allerdings ist eine solche Bearbeitung nur mit einem erheblichen Aufwand realisierbar, was naturgemäß einer rationellen und kostengünstigen Herstellung entgegensteht, wie sie für solche Führungsrohre gefordert wird, die als Serienteile in großen Stückzahlen zum Einsatz kommen.

In der DE 200 16 209 U1, die den nächstliegenden Stand der Technik represäntiert, wird deshalb vorgeschlagen, den Längsschlitz in das Führungsrohr gleich beim Strangpressen mit einzubringen, so dass die genannten Arbeitsgänge im wesentlichen entfallen, wodurch sich gegenüber dem vorgenannten Stand der Technik eine Verbesserung ergibt.

Allerdings sind bei solchen Strangpressprofilen relativ weite Toleranzen in Kauf zu nehmen, die für bestimmte Einsatzzwecke nicht akzeptabel sind.

In diesen Fällen werden dickwandige Präzisionsstahlrohre eingesetzt, die allerdings wieder mechanisch bearbeitet werden müssen, d.h., durch Sägen abgelängt, Plandrehen der Enden sowie Einbringen des Schlitzes. Im letzteren Fall wird zunächst vorgefräst, danach fertig gefräst, entgratet und schließlich, da üblicherweise Stahlrohre aus Kohlenstoffstahl zum Einsatz kommen, ist eine galvanische Verzinkung erforderlich, um die bearbeiteten Flächen korrosionsfest zu erhalten.

Alles in allem sind die bekannten Lineareinheiten nicht geeignet, alle gestellten Bedingungen, sowohl hinsichtlich einer kostengünstigen Herstellung wie auch einer hohen Fertigungsgenauigkeit zu entsprechen.

Aus der WO 2004/028305 A1 ist ein elektromotorischer Möbelantrieb bekannt, dessen Gehäuse durch einen Profilabschnitt gebildet ist, der aus einer handelsüblichen Profilschiene, aus Aluminium oder Stahl hergestellt sein kann, ebenso aus Holz oder einem holzartigen Werkstoff oder einem Kunststoff. Wie zuvor beschrieben, kann dieser prinzipiell ein Führungsrohr darstellende Profilschienenabschnitt aus einem in seiner Grundkontur geschlossenen Profilabschnitt bestehen, der bereichsweise im Sinne eines Einbringens eines Schlitzes partiell geöffnet wird.

Der Erfindung liegt die Aufgabe zugrunde, eine Lineareinheit der gattungsgemäßen Art so weiterzuentwickeln, dass sie kostengünstiger herstellbar ist und mit geringem Aufwand eine hohe Fertigungsgenauigkeit, d.h. geringe Toleranzen aufweist.

Diese Aufgabe wird durch eine Lineareinheit mit den Merkmalen des Anspruchs 1 gelöst.

Ein im Sinne der Erfindung ausgebildetes Führungsrohr zeichnet sich vor allem dadurch aus, dass es sehr kostengünstig herstell- und einsetzbar ist. Dabei ergibt sich automatisch ein Längsschlitz, wenn die Breite des Blechstreifens entsprechend kleiner ist als der Gesamtumfang des Führungsrohres. Natürlich beschränkt sich die Querschnittskontur des Führungsrohres nicht auf die Kreisform, sondern kann jede beliebige Form aufweisen, also sowohl beispielsweise elliptisch wie auch polygon.

Neben der vereinfachten Herstellung, bei der im wesentlichen auf eine mechanische Bearbeitung des Führungsrohres verzichtet werden kann, und die außerordentlich kostengünstig durchführbar ist, ist auch die hohe Fertigungsgenauigkeit hervorzuheben, da die Einhaltung engster Toleranzen möglich ist. Dies betrifft insbesondere die Breitentoleranzen des Längsschlitzes, so dass eine sehr genaue Führung beispielsweise der Spindelmutter im Längsschlitz problemlos möglich ist.

Gegenüber der beschriebenen aufwendigen Bearbeitung eines Präzisionsstahlrohres für diesen Zweck stellt somit die Erfindung eine signifikante Verbesserung dar, die zu einer optimierten Herstellung der gesamten Lineareinheit beiträgt.

Je nach Bedarf kann als Blech, das zu dem Führungsrohr gebogen wird, ein geeignetes Material eingesetzt werden, beispielsweise ein verzinktes Stahlblech oder ein rostfreies.

Zu einer kostengünstigen Herstellung eines Gesamtsystems trägt auch bei, dass die Einzelkomponente Führungsrohr als konfektioniertes Teil lagermäßig vorgehalten werden kann und lediglich auftragsabhängig abzulängen ist. So können äußerst kurze Fertigungszeiten eingehalten werden.

Nach einer vorteilhaften Weiterbildung der Erfindung ist vorgesehen, dass die die Längsnut begrenzenden, sich gegenüberliegenden Wandungen ins Innere des Rohres gerichtet abgekantet sind, so dass sich eine relativ große Führungsfläche für die Spindelmutter ergibt.

In diesem Bereich kann die Spindelmutter auch derart formschlüssig mit dem Führungsrohr verbunden sein, dass sich eine seitliche feste Einspannung ergibt. Hierzu kann die Spindelmutter zwei sich in Achsrichtung erstreckende Längsnuten aufweisen, in die jeweils eine der erwähnten Abkantungen des Längsschlitzes des Führungsrohres einliegt. Insofern ist ständig eine Einspannung der Spindelmutter im jeweiligen Belastungsbereich gegeben, der im wesentlichen immer nur dort vorliegt, wo die Spindelmutter bzw. der daran angeschlossene Führungsschlitten im Einsatz ist.

Endseitig ist die Gewindespindel in Endstücken gelagert, die gleichzeitig die Enden des Führungsrohres verschließen.

Dabei ist jedes Endstück so ausgebildet, dass es einen zapfenartigen Ansatz aufweist, der endseitig in das Führungsrohr ragt und der, vergleichbar mit der Spindelmutter, ebenfalls zwei Längsnuten aufweist, in der jeweils eine Abkantung des Längsschlitzes des Führungsrohres einliegt.

Hierdurch wird eine Verformung des Führungsrohres durch von außen wirkende Kräfte wirksam verhindert, da das Führungsrohr im Endbereich fest im zapfenartigen Ansatz eingespannt ist.

An den zapfenartigen Ansatz schließt sich ein Bündchen an, dessen Außendurchmesser etwa dem Außendurchmesser des Führungsrohres entspricht, so dass sich ein weitgehend flächenbündiger Übergang zwischen dem Führungsrohr und dem Endstück ergibt. Zur Lagerung der drehbaren Spindelmutter ist in jedem Endstück ein Wälz- oder Gleitlager angeordnet, in dem die Spindel mit einem Endzapfen einliegt.

Während die Gewindespindel mit einem Außengewinde versehen ist, sind die beidseitigen Endzapfen glattschaftig ausgebildet, wobei einer der Endzapfen in axialer Erstreckung in einen Antriebszapfen übergeht, der beispielsweise mittels einer Passfeder formschlüssig mit einem Antriebselement, wie einem Motor oder einem Getriebeteil verdrehsicher verbindbar ist.

Die Endzapfen werden bisher durch spangebende Bearbeitung an die als Halbzeug durchgängig mit einem Außengewinde versehene Gewindespindel geformt, üblicherweise durch Drehen.

Naturgemäß ist dies ebenfalls nur mit einem erheblichen Arbeits- und Kostenaufwand möglich, der eine optimierte Fertigung bislang nicht zulässt.

Deshalb ist nach einem weiteren Gedanken der Erfindung vorgesehen, den Endzapfen als separates Teil auszubilden und die Gewindespindel in Form des Halbzeuges lediglich abzulängen und die Endzapfen daran zu befestigen.

Dabei kann der Endzapfen in seinem der Gewindespindel zugewandten Endbereich als Hülse ausgebildet sein, die mit einem Innengewinde versehen ist, so dass der Endzapfen auf die Gewindespindel aufschraubbar und daran durch geeignete Maßnahmen befestigbar ist.

Nach einer bevorzugten Ausgestaltung ist die Hülse mit der Gewindespindel durch Verstemmen verbunden, wobei von außen her, also mantelseitig mittels vorzugsweise einer mit Prägedornen bestückten Prägevorrichtung Eindrücke in die Hülse eingebracht werden, die sich in das üblicherweise als Trapezgewinde ausgebildete Außengewinde der Spindel eingraben.

Zweckmäßigerweise werden hierzu über den Umfang verteilt, vorzugsweise in einem Winkel von 120° mehrere Prägungen vorgenommen, die beispielsweise in Längsachsrichtung der Spindel bzw. der Hülse paarweise mit Abstand zueinander angeordnet sind.

Durch diesen gleichmäßigen Formschluss wird ein einwandfreier Rundlauf von Spindel und Hülse bzw. Spindel und an die Hülse angeschlossenem Zapfen erreicht. Daneben ist ein Lösen der Verbindung auch bei einem zu übertragenden hohen Drehmoment praktisch ausgeschlossen.

Denkbar ist aber auch, den Endzapfen stoffschlüssig, beispielsweise durch Verkleben oder Verlöten, mit der Gewindespindel zu verbinden.

Prinzipiell ist das im Sinne der Erfindung gestaltete Führungsrohr je nach Bedarf modifizierbar, wozu beispielsweise die Einbringung von seitlichen, sich in Längsachsrichtung erstreckenden Sicken zählt, in die der Führungsschlitten eingreifen kann, wodurch dann eine besonders feste Verbindung des Führungsschlittens am Führungsrohr gegeben ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Lineareinheit in einer perspektivischen Ansicht
- Figur 2: ein Führungsrohr der erfindungsgemäßen Lineareinheit in einer schaubildlichen Darstellung
- Figur 3: das Führungsrohr nach Figur 2 im Querschnitt gezeigt
- Figur 4: ein weiteres Ausführungsbeispiel des Führungsrohres, ebenfalls in einer perspektivischen Ansicht
- Figur 5: ein weiteres Ausführungsbeispiel eines Führungsrohres in einer Querschnittsdarstellung
- Figur 6: eine Einzelheit der Lineareinheit in einer perspektivischen Ansicht
- Figur 7: die Einzelheit nach Figur 6 in montierter Stellung, in einer Querschnittsansicht
- Figur 8: eine weitere Einzelheit der Lineareinheit, ebenfalls schaubildlich gezeigt
- Figur 9: die Einzelheit nach Figur 8 in montierter Stellung, im Querschnitt dargestellt
- Figur 10: die Lineareinheit in einer Explosivdarstellung
- Figur 11: eine schematische Darstellung der Lineareinheit in einer geschnittenen Draufsicht
- Figur 12: eine Einzelheit der Darstellung nach Figur 11, ebenfalls in einer geschnittenen Draufsicht
- Figur 13: eine Einzelheit der Lineareinheit in einem schematischen Längsschnitt.

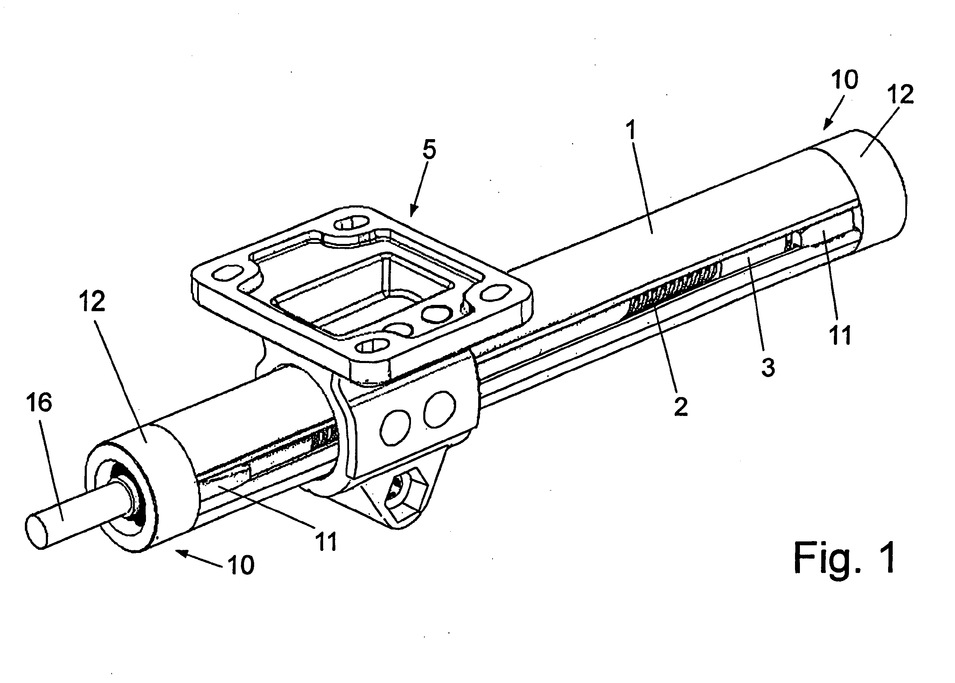

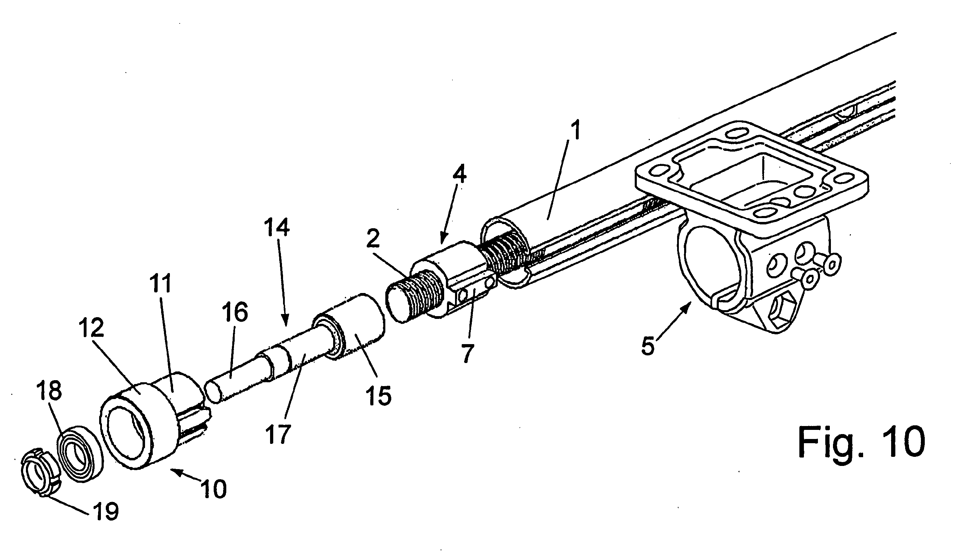

In der Figur 1 ebenso wie in der Figur 10 ist eine Lineareinheit dargestellt, mit einer in einem Führungsrohr 1 gelagerten, einen Führungsschlitten 5 zur Aufnahme eines Werkstücks, eines Werkzeugs oder dergleichen tragenden Antriebseinheit, bestehend aus einer Gewindespindel 2 und einer darauf geführten Spindelmutter 4, die über einen Führungskeil 7 mit dem Führungsschlitten 5 verbunden ist.

Dabei ist die auf der Gewindespindel 2 axial verschiebbar gehaltene Spindelmutter 4 mittels des Führungskeiles 7 verdrehsicher in einer Längsnut 3 des Führungsrohres 1 gehalten, wobei die Spindelmutter 4 bei Verdrehung der Gewindespindel 2 axial verfahrbar ist und damit ebenfalls der Führungsschlitten 5.

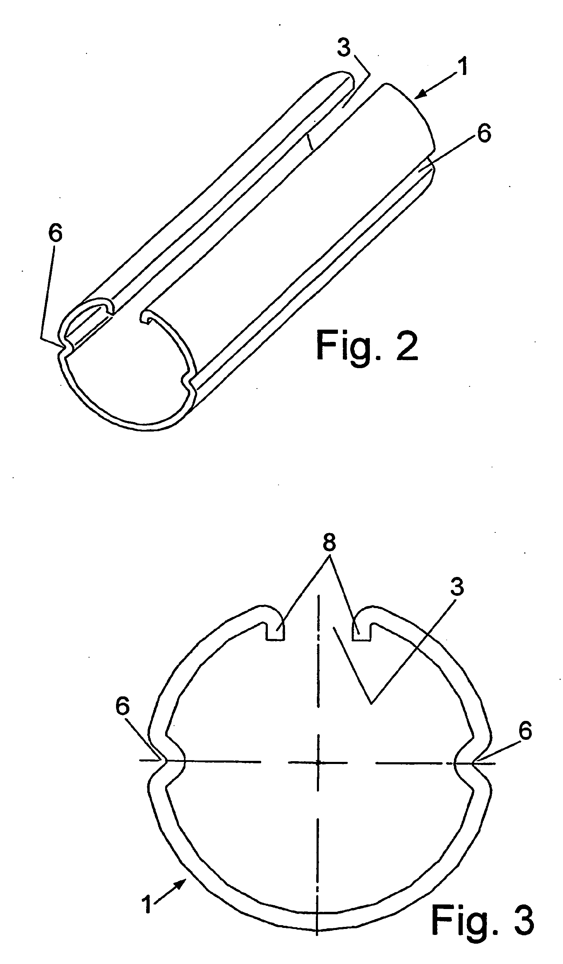

Erfindungsgemäß besteht das Führungsrohr 1 aus einem Blechstreifen, der um eine gedachte Längsachse gebogen ist und bei dem in den Figuren 2 und 3 gezeigten Beispiel mit sich in Längsachsrichtung erstreckenden, außenseitig eingebrachten Sicken 6 versehen ist, die beispielsweise der Führung und Verdrehsicherung des Führungsschlittens 5 dienen.

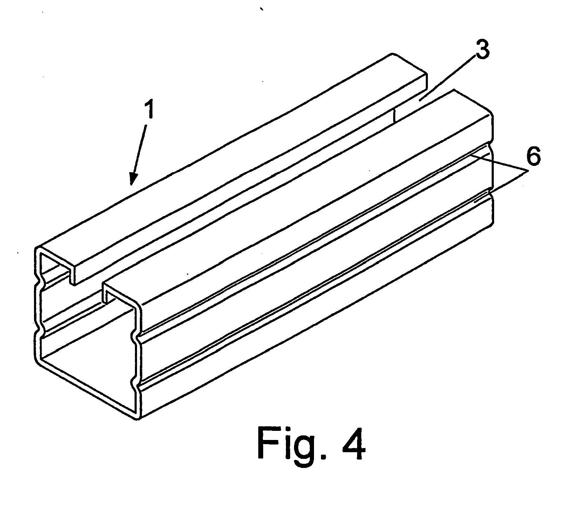

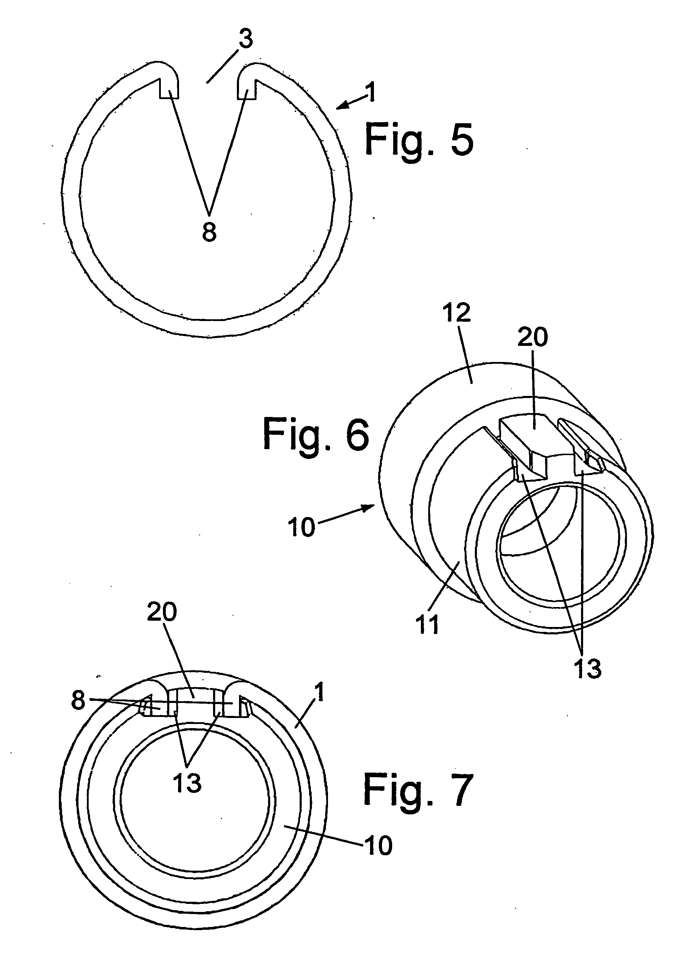

In der Figur 4 ist das Führungsrohr 1 als Vierkantrohr ausgebildet und ebenfalls an zwei sich gegenüberliegenden Seiten mit Sicken 6 versehen. Ebenso wie bei dem Beispiel nach den Figuren 2 und 3 ist auch im Beispiel nach Figur 5 das Führungsrohr 1 als ein im wesentlichen Rundrohr gestaltet, das im Beispiel nach Figur 5 jedoch glattschaftig ausgebildet ist, also ohne Sicken in der Außenwand.

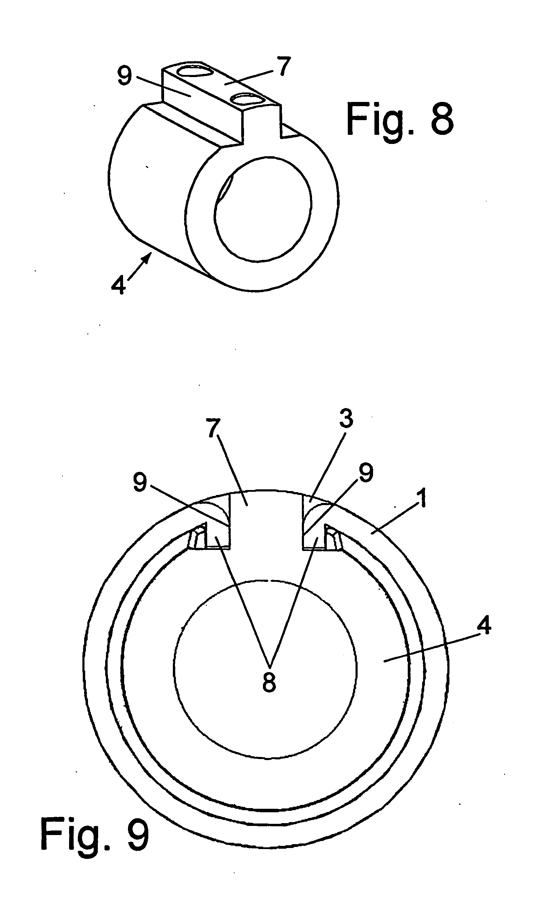

Bei allen gezeigten Ausführungsbeispielen des Führungsrohres 1 weist die Längsnut 3 die sich gegenüberliegende Wandungen bildenden Abkantungen 8 auf, die der Führung der Spindelmutter 4 dienen. Die lichte Weite der Längsnut 3 entspricht etwa der Breite des Führungskeiles 7, wobei die beiden Außenseiten des Führungskeiles 7 Führungsflächen 9 bilden, die, wie besonders deutlich die Figur 9 zu erkennen gibt, an der jeweils zugeordneten Abkantung 8 anliegen, wobei in der Figur 8 die Spindelmutter 4 schematisch dargestellt ist, d.h., ohne ein vorhandenes Innengewinde, das mit der Gewindespindel 2 korrespondiert.

Endseitig ist das Führungsrohr 1 jeweils durch ein Endstück 10 verschlossen, das als Einzelheit in der Figur 6 dargestellt ist.

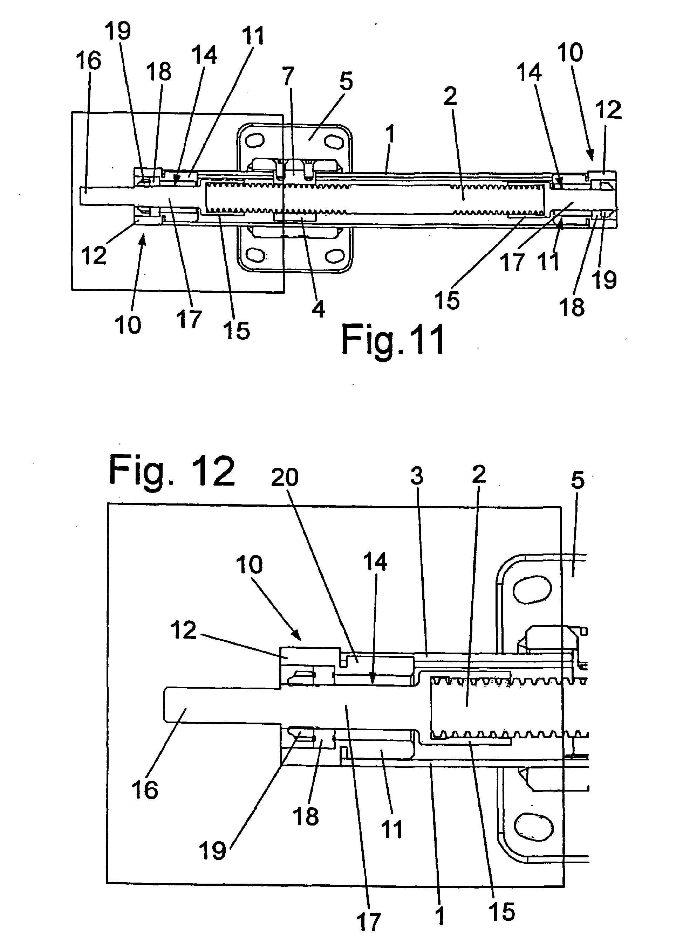

Es ist zu erkennen, dass das Endstück 10 einen zapfenartigen Ansatz 11 besitzt, der, wie besonders deutlich in der Figur 12 zu sehen ist, in das Innere des Führungsrohres 1 eingesteckt ist und dort passgenau einliegt.

Zur Verdrehsicherung des Endstückes 10 ebenso wie zur Stabilisierung des Führungsrohres 1 in den Endbereichen weist der zapfenartige Ansatz 11 zwei parallel und abständig zueinander angeordnete Nuten 13 auf, die einen Keil 20 einschließen, der in den Längsschlitz 3 des Führungsrohres 1 ragt, während die Abkantungen 8 jeweils in den Nuten 13 einliegen.

An den zapfenartigen Ansatz 11 schließt sich ein Bündchen 12 an, das an der Stirnseite des Führungsrohres 1 anliegt und dessen Außendurchmesser etwa dem Außendurchmesser des Führungsrohres 1 entspricht, so dass sich ein flächenbündiger Übergang ergibt.

Insbesondere in den Figuren 11 und 12 ist deutlich erkennbar, dass die Gewindespindel 2 endseitig mittels angeschlossener Endzapfen 14 in den Endstücken 10 drehbar gelagert ist, wobei in dem jeweiligen Bündchen 12 ein Wälzlager 18 angeordnet ist, das über eine Mutter 19 im Endstück 10 gehalten ist, und in dem die Gewindespindel 2 bzw. die Endzapfen 14 drehbar angeordnet sind.

In der Figur 12 ist eine vergrößerte Ansicht eines Teilausschnitts der Figur 11 dargestellt, in der erkennbar ist, dass der Endzapfen 14 als separates Teil ausgebildet ist und an einem Ende als Hülse 15 geformt ist, in der das zugeordnete Ende der Gewindespindel 2 befestigt ist.

An die Hülse 15 schließt sich ein Lagerzapfen 17 an, der in dem Wälzlager 18 einliegt. Antriebsseitig ist der entsprechende Endzapfen 14 zusätzlich mit einem Antriebszapfen 16 versehen, der verdrehsicher mit einem nicht dargestellten Antriebsaggregat verbindbar ist.

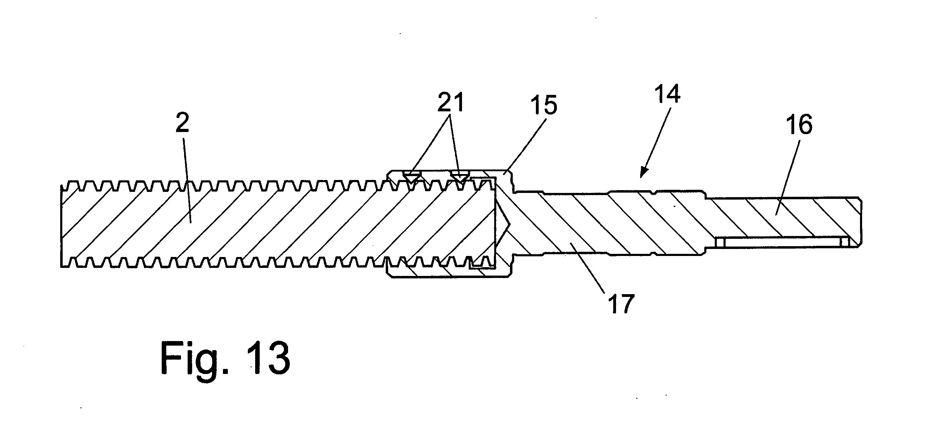

Die Figur 13 zeigt eine Art der Befestigung des Endzapfens 14 an der Gewindespindel 2.

Dabei ist die sich konzentrisch an den Lagerzapfen 17 anschließende Hülse 15 auf die mit einem Trapezgewinde versehene Gewindespindel 2 aufgeschraubt und über Prägungen 21 mit der Gewindespindel 2 verstemmt.

Dazu sind die Prägungen 21 von der Mantelseite der Hülse 15 her mittels nicht dargestellter Prägewerkzeuge eingedrückt, unter Verformung der Gewindegänge sowohl der Hülse 15 wie auch der damit korrespondierenden Gewindespindel 2.

Wie die Figur 13 zeigt, sind vorzugsweise zwei in axialer Richtung hintereinander liegende, jedoch abständig angeordnete Prägungen 21 vorgesehen, die zu einer Reihe gehören, von denen vorzugsweise drei über den Umfang verteilt, also im Abstand von 120° vorgesehen sind.

### Bezugszeichenliste

- 1: Führungsrohr
- 2: Gewindespindel
- 3: Längsnut
- 4: Spindelmutter
- 5: Führungsschlitten
- 6: Sicke
- 7: Führungskeil
- 8: Abkantung
- 9: Führungsfläche
- 10: Endstück
- 11: zapfenartiger Ansatz
- 12: Bündchen
- 13: Nut
- 14: Endzapfen
- 15: Hülse
- 16: Antriebszapfen
- 17: Lagerzapfen
- 18: Wälzlager
- 19: Mutter
- 20: Keil
- 21: Prägung

## Patentansprüche

1. Lineareinheit, mit einer in einem Führungsrohr (1) gelagerten, einen Führungsschlitten (5) zur Aufnahme eines Werkstücks, eines Werkzeugs oder dergleichen tragenden Antriebseinheit, bestehend aus einer Gewindespindel (2) und einer Spindelmutter (4), wobei der Führungsschlitten (5) oder die Spindelmutter (4) in einer Längsnut (3) des Führungsrohres (1) verdrehsicher und axial verfahrbar geführt ist und das Führungsrohr (1) endseitig durch Endstücke (10) verschlossen ist, die jeweils einen in das Innere des Führungsrohres (1) eingesteckten zapfenartigen Ansatz (11) aufweisen, an den sich ein Bündchen (12) anschließt, das an der zugeordneten freien Stirnseite des Führungsrohres (1) anliegt, **dadurch gekennzeichnet, dass** das Führungsrohr (1) aus einem um eine gedachte Längsachse gebogenen Blechstreifen besteht.

2. Lineareinheit nach Anspruch 1, **dadurch gekennzeichnet, dass** das Führungsrohr (1) aus einem verzinkten oder aus einem rostfreien Stahl gebildeten Blechstreifen besteht.

3. Lineareinheit nach Anspruch 1 oder 2, **dadurch gekennzeichnet, dass** die die Längsnut (3) begrenzenden, gegenüberliegenden Wandungen als in das Innere des Rohres gerichtete Abkantungen (8) ausgebildet sind.

4. Lineareinheit nach einem der vorhergehenden Ansprüche, **dadurch gekennzeichnet, dass** die Spindelmutter (4) einen Führungskeil (7) aufweist, dessen Außenflächen die Führungsflächen (9) für die zugeordneten Abkantungen (8) bilden.

5. Lineareinheit nach Anspruch 3, **dadurch gekennzeichnet, dass** die Spindelmutter (4) sich in Längsachsrichtung erstreckende Nuten aufweist, in der die Abkantungen (8) des Führungsrohres (1) einliegen.

6. Lineareinheit nach Anspruch 3, **dadurch gekennzeichnet, dass** der zapfenartige Ansatz (11) zwei parallel und abständig zueinander verlaufende Nuten (13) aufweist, in denen die Abkantungen (8) einliegen und die einen Keil (20) einschließen, der formschlüssig in der Längsnut (3) des Führungsrohres (1) einliegt.

7. Lineareinheit nach einem der vorhergehenden Ansprüche, **dadurch gekennzeichnet, dass** das Führungsrohr (1) im Querschnitt rund, oval oder polygon ist.

8. Lineareinheit nach einem der vorhergehenden Ansprüche, **dadurch gekennzeichnet, dass** das Führungsrohr (1) auf den sich gegenüberliegenden Seiten mit sich in Längsachsrichtung erstreckenden Sicken (6) versehen ist.

9. Lineareinheit nach einem der vorhergehenden Ansprüche, bei der die Gewindespindel (2) beidseitig mittels jeweils eines Endzapfens (14) im zugeordneten Endstück (10) drehbar gelagert ist, **dadurch gekennzeichnet, dass** jeder Endzapfen (14) als separates Teil ausgebildet und mit der Gewindespindel (2) verbunden ist.

10. Lineareinheit nach einem der vorhergehenden Ansprüche, **dadurch gekennzeichnet, dass** der Endzapfen (14) an einem Ende als Hülse (15) ausgebildet ist, in der die Gewindespindel (2) einliegt und darin befestigt ist.

11. Lineareinheit nach einem der vorhergehenden Ansprüche, **dadurch gekennzeichnet, dass** die Hülse (15) ein Innengewinde aufweist, das auf die Gewindespindel (2) aufgedreht ist, wobei die Hülse (15) verdrehsicher mit der Gewindespindel (2) verbunden ist.

12. Lineareinheit nach einem der vorhergehenden Ansprüche, **dadurch gekennzeichnet, dass** die auf die Gewindespindel (2) aufgedrehte Hülse (15) durch mindestens eine Prägung (21) verdrehsicher an der Gewindespindel (2) gehalten ist, wobei die Prägungen (21) von der Mantelseite her eingebracht sind unter Verformung der ineinander greifenden Gewindegänge.

13. Lineareinheit nach einem der vorhergehenden Ansprüche, **dadurch gekennzeichnet, dass** über den Umfang verteilt mehrere Prägungen (21) vorgesehen sind, vorzugsweise in gleichem Winkelabstand.

14. Lineareinheit nach einem der vorhergehenden Ansprüche, **dadurch gekennzeichnet, dass** mehrere Prägungen (21) in Längsachsrichtung der Hülse (15) abständig zueinander vorgesehen sind.

15. Lineareinheit nach einem der vorhergehenden Ansprüche, **dadurch gekennzeichnet, dass** der Endzapfen (14) stoffschlüssig mit der Gewindespindel (2) verbunden ist.

## Claims

1. Linear unit having a drive unit which is mounted in a guide tube (1), supports a guiding carriage (5) for holding a workpiece, a tool or the like, and consists of a threaded spindle (2) and a spindle nut (4), wherein the guiding carriage (5) or the spindle nut (4) is guided in a rotationally fixed and axially displaceable manner in a longitudinal groove (3) in the guide tube (1) and the guide tube (1) is closed at the ends by end pieces (10) which each have a pin-like extension (11) which is plugged into the interior of the guide tube (1) and which is adjoined by a collar (12) which rests against the associated free end side of the guide tube (1), **characterized in that** the guide tube (1) consists of a sheet-metal strip bent around an imaginary longitudinal axis.

2. Linear unit according to Claim 1, **characterized in that** the guide tube (1) consists of a galvanized sheet-metal strip or a sheet-metal strip made of a rust-resistant steel.

3. Linear unit according to Claim 1 or 2, **characterized in that** the opposing walls adjoining the longitudinal groove (3) are formed as folded edges (8) directed into the interior of the tube.

4. Linear unit according to one of the preceding claims, **characterized in that** the spindle nut (4) has a guide wedge (7), the outer surfaces of which form the guiding surfaces (9) for the associated folded edges (8).

5. Linear unit according to Claim 3, **characterized in that** the spindle nut (4) has grooves that extend in the direction of the longitudinal axis and in which the folded edges (8) of the guide tube (1) are positioned.

6. Linear unit according to Claim 3, **characterized in that** the pin-like extension (11) has two grooves (13) which run in a manner parallel to and spaced apart from one another, in which the folded edges (8) are positioned and which enclose a wedge (20) which is positioned in a form-fitting manner in the longitudinal groove (3) in the guide tube (1).

7. Linear unit according to one of the preceding claims, **characterized in that** the guide tube (1) is round, oval or polygonal in cross section.

8. Linear unit according to one of the preceding claims, **characterized in that** the guide tube (1) is provided on the opposing sides with beads (6) that extend in the direction of the longitudinal axis.

9. Linear unit according to one of the preceding claims, in which the threaded spindle (2) is mounted in a rotatable manner in the associated end piece (10) on both sides by means of in each case one end pin (14), **characterized in that** each end pin (14) is formed as a separate part and is connected to the threaded spindle (2).

10. Linear unit according to one of the preceding claims, **characterized in that** the end pin (14) is formed at one end as a sleeve (15) in which the threaded spindle (2) is positioned and is fastened therein.

11. Linear unit according to one of the preceding claims, **characterized in that** the sleeve (15) has an internal thread which is screwed onto the threaded spindle (2), wherein the sleeve (15) is connected in a rotationally fixed manner to the threaded spindle (2).

12. Linear unit according to one of the preceding claims, **characterized in that** the sleeve (15) screwed onto the threaded spindle (2) is held in a rotationally fixed manner on the threaded spindle (2) by at least one embossment (21), wherein the embossments (21) are introduced from the lateral surface side with deformation of the threads engaging in one another.

13. Linear unit according to one of the preceding claims, **characterized in that** a plurality of embossments (21) are provided, preferably at the same angular spacing, in a manner distributed over the circumference.

14. Linear unit according to one of the preceding claims, **characterized in that** a plurality of embossments (21) are provided in a manner spaced apart from one another in the direction of the longitudinal axis of the sleeve (15).

15. Linear unit according to one of the preceding claims, **characterized in that** the end pin (14) is connected in a materially integral manner to the threaded spindle (2).

## Revendications

1. Unité linéaire, comportant une unité d'entraînement, qui est logée dans un tube de guidage (1) et porte un chariot de guidage (5) destiné à recevoir une pièce, un outil ou similaire, et qui est formée par une broche filetée (2) et un écrou de broche (4), ledit chariot de guidage (5) ou l'écrou de broche (4) étant logés dans une rainure longitudinale (3) du tube de guidage (1) de manière immobile en rotation et mobile axialement, et ledit tube de guidage (1) étant fermé aux extrémités par des embouts (10) qui comportent chacun une saillie (11) en forme de téton, qui est enfichée à l'intérieur du tube de guidage (1) et est prolongée par une collerette (12) qui est en appui contre le côté frontal libre associé du tube de guidage (1), **caractérisée en ce que** le tube de guidage (1) est réalisé à partir d'une bande métallique cintrée autour d'un axe longitudinal imaginaire.

2. Unité linéaire selon la revendication 1, **caractérisée en ce que** le tube de guidage (1) est réalisé à partir d'une bande métallique galvanisée ou en acier inoxydable.

3. Unité linéaire selon la revendication 1 ou 2, **caractérisée en ce que** les parois opposées, délimitant la rainure longitudinale (3), sont réalisées sous la forme de rebords (8) dirigés vers l'intérieur du tube.

4. Unité linéaire selon l'une quelconque des revendications précédentes, **caractérisée en ce que** l'écrou de broche (4) comporte un taquet de guidage (7), dont les faces extérieures forment les surfaces de guidage (9) pour les rebords (8) associés.

5. Unité linéaire selon la revendication 3, **caractérisée en ce que** l'écrou de broche (4) comporte des rainures orientées dans la direction de l'axe longitudinal, dans lesquelles sont engagés les rebords (8) du tube de guidage (1).

6. Unité linéaire selon la revendication 3, **caractérisée en ce que** la saillie (11) en forme de téton comporte deux rainures (13) parallèles entre elles et écartées l'une de l'autre, dans lesquelles sont engagés les rebords (8) et qui délimitent entre elles une cale (20) qui est engagée par conjugaison de forme dans la rainure longitudinale (3) du tube de guidage (1).

7. Unité linéaire selon l'une quelconque des revendications précédentes, **caractérisée en ce que** le tube de guidage (1) a une section transversale ronde, ovale ou polygonale.

8. Unité linéaire selon l'une quelconque des revendications précédentes, **caractérisée en ce que** le tube de guidage (1) comporte, sur les côtés opposés, des gorges (6) orientées dans la direction de l'axe longitudinal.

9. Unité linéaire selon l'une quelconque des revendications précédentes, dans laquelle la broche filetée (2) est montée rotative aux deux extrémités, respectivement au moyen d'un tourillon final (14), dans l'embout (10) associé, **caractérisée en ce que** chaque tourillon final (14) est réalisé sous la forme d'une pièce séparée et est relié à la broche filetée (2).

10. Unité linéaire selon l'une quelconque des revendications précédentes, **caractérisée en ce que** le tourillon final (14) est réalisé à une extrémité en forme de douille (15), dans laquelle la broche filetée (2) est engagée et est fixée.

11. Unité linéaire selon l'une quelconque des revendications précédentes, **caractérisée en ce que** la douille (15) comporte un filetage intérieur, qui est vissé sur la broche filetée (2), ladite douille (15) étant reliée solidaire en rotation avec la broche filetée (2).

12. Unité linéaire selon l'une quelconque des revendications précédentes, **caractérisée en ce que** la douille (15), vissée sur la broche filetée (2), est maintenue solidaire en rotation sur la broche filetée (2) par au moins une empreinte (21), les empreintes (21) étant ménagées à partir de la face périphérique moyennant la déformation des pas de vis engrenant entre eux.

13. Unité linéaire selon l'une quelconque des revendications précédentes, **caractérisée en ce qu'**il est prévu plusieurs empreintes (21) réparties sur le pourtour, de préférence à même distance angulaire les unes des autres.

14. Unité linéaire selon l'une quelconque des revendications précédentes, **caractérisée en ce qu'**il est prévu plusieurs empreintes (21) écartées les unes des autres dans la direction de l'axe longitudinal de la douille (15).

15. Unité linéaire selon l'une quelconque des revendications précédentes, **caractérisée en ce que** le tourillon final (14) est relié par liaison de matière à la broche filetée (2).
